# EUROPEAN PATENT SPECIFICATION

(11) **EP 4 446 251 B1**
(45) Date of publication and mention of the grant of the patent: **15.04.2026**
(21) Application number: 22913507.4
(22) Date of filing: 14.09.2022
(51) Int. Cl.: B65D 90/00

(54) **CONTROL SYSTEM AND METHOD FOR GUIDING CLASSIFIED STORAGE AND FEEDING/DISCHARGING TAKEOUT AND PLACEMENT OF LOCK PINS**
STEUERUNGSSYSTEM UND VERFAHREN ZUR FÜHRUNG DER KLASSIFIZIERTEN SPEICHERUNG UND ZUFUHR/AUSGABE UND PLATZIERUNG VON SPERRSTIFTEN
SYSTÈME DE COMMANDE ET PROCÉDÉ DE GUIDAGE DE STOCKAGE CLASSIFIÉ ET D'ALIMENTATION/ÉVACUATION DE SORTIE ET DE MISE EN PLACE DE BROCHES DE VERROUILLAGE

(30) Priority: 31.12.2021 CN 202111658588
(43) Date of publication of application: 16.10.2024
(73) Proprietor: Shanghai Zhenhua Heavy Industries Co., Ltd., Shanghai 200125 (CN)
(72) Inventor: CAO, Le, Shanghai 200125 (CN); ZHOU, Chaoqun, Shanghai 200125 (CN); YUAN, Feng, Shanghai 200125 (CN); ZHANG, Yujie, Shanghai 200125 (CN); CHEN, Jinqian, Shanghai 200125 (CN); ZHAO, Yongxin, Shanghai 200125 (CN)
(74) Representative: Cabinet Chaillot
(86) International application number: PCT/CN2022/118662
(87) International publication number: WO 2023/124238

(56) References cited:
- WO-A1-2021/062619
- CN-A- 111 195 911
- CN-A- 113 184 575
- CN-A- 113 753 616
- CN-A- 113 816 125
- CN-A- 114 194 748
- CN-B- 113 816 125
- CN-U- 214 490 596
- CN-U- 215 035 038
- JP-A- 2018 158 846
- KR-B1- 101 950 248
- US-A1- 2012 089 320

## Description

### BACKGROUND OF THE INVENTION

### 1.Field of the Invention

The present invention relates to the field of disassembly and assembly of container lock pins, and in particular relates to a control system and method for guiding classified storage and feeding/discharging takeout and placement of lock pins.

### 2. Description of the related Art

At present, lock pins of containers are disassembled and assembled always relying on the traditional manual disassembly and assembly mode. This mode needs to consume a lot of labor cost and time cost, and has large labor intensity, which seriously hinders the development of automation technologies. In addition, it is one of the key technologies to improve the automation efficiency of a container lock pin disassembling and assembling platform, in order to collect and classify various disassembled lock pins, and to correctly and automatically supplement the lock pins of the system in an installation link. In addition, a control system also needs to interact information with a TOS system at any time, and at the same time calculate and predict the changes in quantity and types of pre-disassembled and pre-assembled containers, improve an automation rate of a lock assembling link, and accurately control a lock head emptying state in a stacked storage unit at the end of a platform operation, thereby avoiding the situations of ship locking, etc.

However, a general control mode in the prior art is difficult to deal with a destination of a lock head in time and reduce a participation rate of manual feeding. When the container lock pin disassembling and assembling platform starts to operate, if an operation mode is often switched between a disassembled state and an assembled state, a good guiding strategy for lock pins in the operation procedure is required to increase the automation rate of the platform whatever the dissembled lock is directly thrown away from feeding and discharging, or stored first for later locking, or how many lock heads of the corresponding type and quantity are supplemented through feeding and discharging.

In view of the above situations, it is urgent to develop a control system and method for guiding classified storage and feeding/discharging takeout and placement of lock pins, which can adjust the destination of disassembling the lock head and the source of assembling the lock head in real time, and achieve rapid response and accurate control, thereby increasing an automation rate of the container lock pin disassembling and assembling platform.

Document WO 2021/062619 A1 discloses a container lock pin sorting method and apparatus, involving acquiring lock pin images with matching lock pin images with each reference image in a preset lock pin type library and identifying a lock pin type. JP 2018 158846 A relates to providing a storage system for efficiently storing and taking out an individual case unit. CN 111 195 911 A refers to a pin system for replacing a pin device for bearing a to-be-processed unit in a vehicle production system, including a positioning module arranged to an existing pin on the to-be-changed pin device into a target pin.

### BRIEF SUMMARY OF THE INVENTION

In view of the above defects existing in the prior art, an object of the present invention is to provide a control system and method for guiding classified storage and feeding/discharging takeout and placement of lock pins. Through double confirmation for the types and the quantity of the lock pins, a destination of disassembling the lock pins and a source of assembling the lock pins are adjusted in real time, and rapid response and accurate control are achieved, thereby increasing an automation rate of a container lock pin disassembling and assembling platform.

In order to achieve the above object, the technical scheme adopted in the present invention is as follows:
The first aspect of the present invention provides, according to claim 1, a control system for guiding classified storage and feeding/discharging takeout and placement of lock pins, comprising:
a terminal operating system, a guiding system, a robot system, a feeding/discharging device, a transportation unit, and a stacked storage unit, wherein
the terminal operating system is configured to acquire terminal operation information in real time and transmit information of containers that need to be unloaded and loaded and corresponding lock pin information to the guiding system; and
the guiding system is configured to guide a source and a destination of lock pins according to the information transmitted by the terminal operating system, and control the robot system, the feeding/discharging device, the transportation unit and the stacked storage unit to perform operations for disassembly and assembly, classified storage and feeding/discharging takeout and placement of the lock pins.

Preferably, the guiding system comprises a PC host and a PLC controller; the PC host is configured to receive the information transmitted by the terminal operating system, perform classified calculation on the lock pins that need to be disassembled and assembled, then make a guiding judgment on the source of assembling the lock pins and the destination of disassembling the lock pins, and transmit a guiding judgment result to the PLC controller; and the PLC controller is configured to control the robot system to disassemble and assemble the lock pins according to the information transmitted by the PC host, and transport the disassembled lock pins to the stacked storage unit by using the transportation unit for classified storage, or control the feeding/discharging device to perform a feeding/discharging takeout and placement operation for the lock pins.

Preferably, the transportation unit comprises a transportation device and a servo crane; the transportation device is configured to transport the lock pins disassembled by the robot system to an exchange area of the stacked storage unit; and the servo crane is configured to perform classified storage on the switched lock pins or perform the feeding/discharging takeout and placement operation through the feeding/discharging device.

Preferably, the control system for guiding classified storage and feeding/discharging takeout and placement of lock pins further comprises a visual recognition device and an HMI touch screen; the visual recognition device is installed on an end shaft of the robot system to perform photo recognition on the lock pins; the HMI touch screen is configured to perform a manual operation; and when lock pin information recognized by the visual recognition device is inconsistent with lock pin information provided by the terminal operating system, a lock pin type is manually confirmed through the HMI touch screen, and the HMI touch screen feeds the result back to the terminal operating system and the guiding system.

Preferably, the visual recognition device is a binocular vision camera.

The second aspect of the present invention provides, according to claim 5, a control method for guiding classified storage and feeding/discharging takeout and placement of lock pins, which adopts the control system as the first aspect and comprises the following steps:
starting a lock pin disassembling and assembling platform, and then establishing a communication between the terminal operating system and the guiding system, wherein the terminal operating system is configured to transmit information of containers that need to be unloaded and loaded in the current operation and corresponding lock pin information to the guiding system; and
performing classified calculation on the pin locks by the guiding system, judging a source and a destination of each type of lock pins and making a guiding process, wherein the guiding system is configured to control the robot system, the feeding/discharging device, the transportation unit and the stacked storage unit to perform operations for disassembly and assembly, classified storage and feeding/discharging takeout and placement of the lock pins.

Preferably, a classified calculation procedure performed by the guiding system for the pin locks is as follows: the PC host classifies the lock pins according to the information transmitted by the terminal operating system, counts the quantity of each type of lock pins that need to be disassembled and assembled, then perform compared calculation on the quantity of each type of lock pins that need to be disassembled and assembled and a dynamic quantity of said type of lock pins stored in the stacked storage unit, and finally makes a guiding judgment on the source of assembling each type of lock pins and the destination of disassembling the lock pins, and transmit a guiding judgment result to the PLC controller.

Preferably, the guiding procedure is as follows:
a lock pin disassembling and assembling operation, wherein the PLC controller controls the robot system to disassemble and assemble the lock pins that need to be disassembled and assembled, and transfers the disassembled lock pins to the transportation device;
classified storage of the lock pins, wherein the PLC controller transfers the disassembled lock pins to an exchange area of the stacked storage unit by using the transportation device, and controls the servo crane to perform classified storage on the lock pins in the exchange area; and
a feeding/discharging takeout and placement operation, wherein the PLC controller guides the servo crane to transfer the disassembled lock pins or the lock pins in the exchange area to the feeding/discharging device for the feeding/discharging takeout and placement operation.

Preferably, the guiding process further comprises recognizing types of the lock pins;
a procedure of recognizing the types of the lock pins is as follows: in the process of the lock pin disassembling and assembling operation, the PLC controller controls the visual recognition device on the robot system to perform photo recognition on the lock pins; when the type of the lock pins recognized by the visual recognition device is consistent with lock pin information transmitted by the terminal operating system, the lock pin disassembling and assembling operation is continued; on the contrary, an error is reported; the type of the lock pins is manually confirmed through the HMI touch screen; the confirmed type of the lock pins is fed back to the terminal operating system and the guiding system for information update; and then the lock pin disassembling and assembling operation is continued.

Preferably, in the guiding process:
in the guiding process of a type of lock pins, as the quantity of said type of lock pins that need to be disassembled and assembled changes, the guiding system makes an update according to the information transmitted by the terminal operating system, performs compared calculation on the quantity of said type of lock pins again with the current quantity of said type of lock pins in the stacked storage unit, updates the source and destination of said type of lock pins, and then continues to perform the guiding process; and/or
when a transfer or temporary storage container appears at a terminal, at the end of a guiding process of a type of lock pins, the stacked storage unit also stores said type of lock pins, and then said type of lock pins in the stacked storage unit need to be emptied and restored to an initialized state.

The control system and method for guiding classified storage and feeding/discharging takeout and placement of lock pins provided by the present invention have the beneficial effects:
1, according to the control system and method for guiding classified storage and feeding/discharging takeout and placement of lock pins provided by the present invention, through the double confirmation for the types and the quantity of the lock pins, the destination of disassembling the lock pins and the source of assembling the lock pins are adjusted in real time, and rapid response and accurate control are achieved, thereby increasing an automation rate of a container lock pin disassembling and assembling platform; and
2, according to the control system and method for guiding classified storage and feeding/discharging takeout and placement of lock pins provided by the present invention, the visual recognition device is configured on an end shaft of the robot system to perform photo recognition, the PC host is configured to interact information with the terminal operating system, the HMI touch screen is configured to perform local control and feedback of real-time storage of the lock pins, and the servo crane is configured to perform classified storage of the lock pins or calculate and determine the quantity and types of pre-disassembled and pre-assembled lock pins in combination with the control for the feeding/discharging device to perform an interaction operation and the PLC controller, record the types and quantity of lock pins in the stacked storage unit and allocate storage positions, thereby achieving high overall reliability, optimizing the guiding strategy and greatly increasing an automation rate of the container lock pin disassembling and assembling platform.

### BRIEF DESCRIPTION OF THE DRAWINGS

After reading the detailed description of the non-restrictive embodiments with reference to the following accompanying drawings, other features, objects and advantages of the present invention will become more apparent:
FIG. 1 is a control schematic diagram of a control system for guiding classified storage and feeding/discharging takeout and placement of lock pins of the present invention; and
FIG. 2 is a mechanical arrangement diagram of the control system for guiding classified storage and feeding/discharging takeout and placement of lock pins of the present invention, wherein (a) is a front view, (b) is a left view, and (c) is a top view.

Reference symbols represent the following components:1-terminal operating system; 2-PC host; 3-PLC controller; 4-transportation device; 5-robot system; 6-stacked storage unit; 7-servo crane; 8-feeding/discharging device; 9-HMI touch screen; 10-visual recognition device; 11-container; and 12-electric control cabinet.

### DESCRIPTION OF ILLUSTRATIVE EMBODIMENTS

In order to better understand the above technical solution of the present invention, the technical solution of the present invention will be further described below in conjunction with the embodiments.

In a terminal transportation process, in order to ensure the safety of transportation, a container 11 needs to be equipped with a lock pin when a ship is loaded, and the lock pin needs to be disassembled from the container 11 when the ship is unloaded. However, in the operation process of a lock pin disassembling and assembling platform, the lock pin needs to be switched frequently between a disassembled mode and an assembled mode. For example, the disassembled lock pin is thrown away directly by a feeding/discharging device 8 or stored for subsequent assembly of the lock pin, or a lock pin of a corresponding type is supplemented by the feeding/discharging device 8. In the above process, it is necessary to effectively guide the lock pin in the operation process in order to increase the automation rate of the lock pin disassembling and assembling platform.

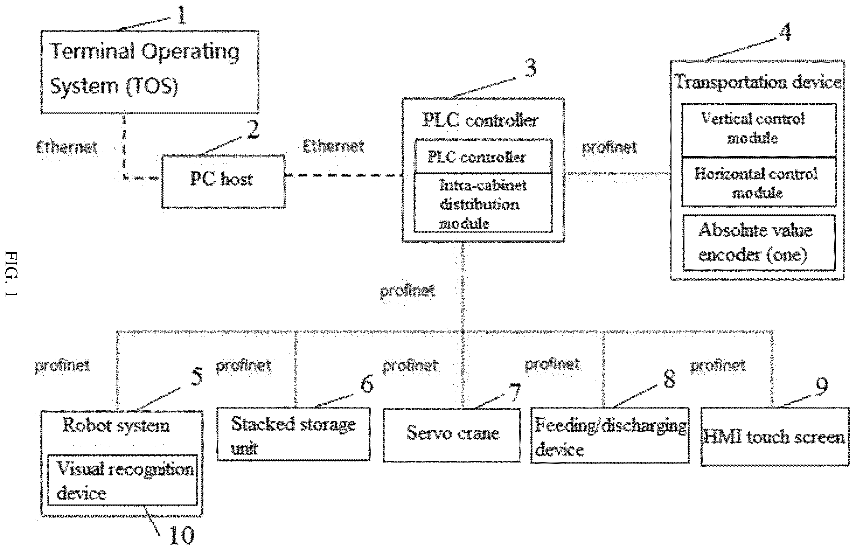

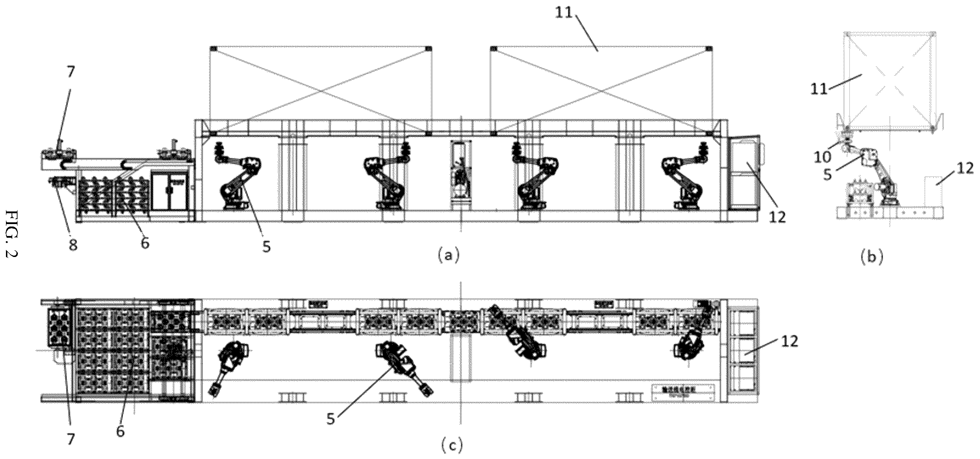

As shown in FIG. 1, and (a), (b) and (c) in FIG. 2, a control system for guiding classified storage and feeding/discharging takeout and placement of lock pins includes a terminal operating system 1 (TOS), a guiding system, a robot system 5, a feeding/discharging device 8, a transportation unit and a stacked storage unit 6. The terminal operating system 1 is configured to acquire terminal operation information in real time, and transmit information of containers 11 (e.g., types and quantity of the containers 11) that need to be unloaded and loaded and corresponding lock pin information (types and quantity of lock pins) to the guiding system; and the guiding system is configured to make a guiding process for a source and a destination of lock pins according to the information transmitted by the terminal operating system 1, and control the robot system 5, the feeding/discharging device 8, the transportation unit and the stacked storage unit 6 to perform operations for disassembly and assembly, classified storage and feeding/discharging takeout and placement of the lock pins. Through the cooperation of various parts, according to the control system for guiding classified storage and feeding/discharging takeout and placement of lock pins provided by the present invention, the destination of disassembling the lock pins and the source of pre-assembling the lock pins are adjusted in real time, and rapid response and accurate control are achieved, thereby increasing an automation rate of the container lock pin disassembling and assembling platform.

As shown in FIG. 1, the guiding system includes a PC host 2 and a PLC controller 3. The PC host 2 is configured to receive information transmitted by the terminal operating system 1, perform classified calculation on the lock pins that need to be disassembled and assembled, then make a guiding judgment on the source of assembling the lock pins and the destination of disassembling the lock pins, and transmit a guiding judgment result to the PLC controller 3. The PLC controller 3 is configured to control the robot system 5 to disassemble and assemble the lock pins according to the information transmitted by the PC host 2, and transport the disassembled lock pins to the stacked storage unit 6 by using the transportation unit for classified storage, or control the feeding/discharging device 8 to perform a feeding/discharging takeout and placement operation of the lock pins.

As shown in FIG. 1, and (a), (b) and (c) in FIG. 2, the transportation unit includes a transportation device 4 and a servo crane 7. The transportation device 4 is configured to transport the lock pins disassembled by the robot system 5 to an exchange area of the stacked storage unit 6. The PLC controller 3 calculates a position of the transportation device 4 by relying on an absolute value encoder built in the transportation device 4, and a vertical control module and a horizontal control module to control the movement of the transportation device 4. The servo crane 7 is configured to perform classified storage on the lock pins in the exchange area or perform the feeding/discharging takeout and placement operation through the feeding/discharging device 8.

As shown in FIG. 1, and (a), (b) and (c) in FIG. 2, in a specific embodiment, the control system for guiding classified storage and feeding/discharging takeout and placement of lock pins further includes a visual recognition device 10 and an HMI touch screen 9. The visual recognition device 10 is installed on an end shaft of the robot system 5 to perform photo recognition on the lock pins. In a further preferred scheme, the visual recognition device 10 is a binocular vision camera; the HMI touch screen 9 is configured to perform a manual operation; and when lock pin information recognized by the visual recognition device 10 is inconsistent with lock pin information provided by the terminal operating system 1, a lock pin type is manually confirmed through the HMI touch screen 9, and the HMI touch screen 9 feeds the result back to the terminal operating system 1 and the guiding system. Through double confirmation for the types and the quantity of the lock pins, the reliability is more high and a guiding strategy is further optimized, thereby greatly increasing the automation rate of the container lock pin disassembling and assembling platform.

As shown in (a), (b) and (c) in FIG. 2, the stacked storage unit 6 may be divided into a plurality of stacking areas through the PLC controller 3, and is configured to store lock pins of the same type in the same stacking area, such that the PC host 2 may count the quantity and storage positions of the lock pins of the same type, thereby better guiding classified storage and feeding/discharging takeout and placement operations of the lock pins.

As shown in FIG. 1, in the control system for guiding classified storage and feeding/discharging takeout and placement of lock pins, the communication among the terminal operating system 1, the guiding system, the robot system 5, the feeding/discharging device 8, the transportation unit and the stacked storage unit 6 is connected in a bus form, such as Ethernet and Profinet. As shown in (a), (b) and (c) in FIG. 2, a switch, a protection electric appliance, auxiliary equipment and others of the control system for guiding classified storage and feeding/discharging takeout and placement of the lock pins are provided in an electric control cabinet 12.

As shown in FIG. 1, and (a), (b) and (c) in FIG. 2, the present invention further provides a control method for guiding classified storage and feeding/discharging takeout and placement of lock pins, in which the control system for guiding classified storage and feeding/discharging takeout and placement of lock pins is used. The control method includes the following steps: starting a lock pin disassembling and assembling platform, and then establishing a communication between the terminal operating system 1 and the guiding system, wherein the terminal operating system 1 is configured to transmit information of containers 11 that need to be unloaded and loaded in the current operation and corresponding lock pin information to the guiding system; and performing classified calculation on the pin locks by the guiding system, judging a source and a destination of each type of lock pins and making a guiding process, wherein the guiding system is configured to control the robot system 5, the feeding/discharging device 8, the transportation unit and the stacked storage unit 6 to perform operations for disassembly and assembly, classified storage and feeding/discharging takeout and placement of the lock pins.

A specific process of the control method for guiding classified storage and feeding/discharging takeout and placement of lock pins provided by the present invention is as follows.
(1) After the lock pin disassembling and assembling platform is started, the control system for guiding classified storage and feeding/discharging takeout and placement of lock pins enters an initialized state. At this moment, the lock pin disassembling and assembling platform is in a lock disassembling mode for the first time, a tray on which the lock pins are placed on each station is not equipped with a lock pin, and there is also no lock pin in the tray of the stacked storage unit 6 (after each operation, if the stacked storage unit 6 still has the unused lock pin, the control system for guiding classified storage and feeding/discharging takeout and placement of lock pins may also empty the stacked storage unit 6 by an equipment emptying mode). After the terminal operating system 1 establishes a communication with the guiding system (the PC host 2), the control system for guiding classified storage and feeding/discharging takeout and placement of lock pins is in a standby preparation state. Then, the terminal operating system 1 sends information such as the sizes and quantity of the containers 11 that need to be unloaded and loaded in the current operation on the ship and the corresponding lock pin type to the guiding system (the PC host 2).
(2) A classified classification procedure of the guiding system for the lock pins is as follows: the PC host 2 classifies the lock pins according to the information transmitted by the terminal operating system 1 (for example, the lock pins that can be used universally are listed as a category, and the lock pins that cannot be used universally are divided into three categories), and counts the quantity of each type of lock pins that need to be disassembled and assembled (the quantity of each type of the containers 11 that need to be loaded and unloaded and the corresponding quantity of the lock pins are counted, and then subjected to classified calculation depending on the type). According to a principle that the lock pins in in the stacked storage unit 6 at the end of the lock pin disassembling and assembling platform operation are guaranteed to be emptied as much as possible to avoid ship locking and other situations, the quantity of each type of lock pins that need to be disassembled and assembled and a dynamic quantity of this type of lock pins stored in the stacked storage unit 6 are subjected to classified calculation, a guiding judgment is finally made for the source of assembling each type of lock pins and the destination of disassembling the lock pins (in the guiding process of each type of lock pins, how many lock pins need to be stored and how many lock pins need to be transferred to the feeding/discharging device 8 for processing should be known, and under normal circumstances, at the end of the lock disassembling and assembling process, the quantity of this type of lock pins in the stacked storage area is zero), and a guiding judgment result is then transmitted to the PLC controller 3.
(3) Guiding process procedure
   3.1 A lock pin disassembling and assembling operation, wherein the PLC controller 3 controls the robot system 5 to disassemble and assemble the lock pins that need to be disassembled and assembled according to the guiding judgment result, and transfers the disassembled lock pins to the transportation device 4.
   3.2 Classified storage of lock pins, wherein the PLC controller 3 transfers the disassembled lock pins to an exchange area of the stacked storage unit 6 by using the transportation device 4, and controls the servo crane 7 to perform the classified storage on the lock pins in the exchange area according to the guiding judgment result. In the storage process, the PLC controller 3 may perform planning according to a situation of the stacked storage unit 6, store the same type of lock pins in a certain stacking area, perform accumulative or degressive counting, and record an internal storage state (type, quantity and position of the lock pins)of the stacked storage unit 6 in combination with the limitation for area layers of the stacked storage unit 6, for the guiding system to perform a calculation.
   3.3 A feeding/discharging takeout and placement operation, wherein the PLC controller 3 guides the servo crane 7 to transfer the disassembled lock pins or the lock pins in the exchange area to the feeding/discharging device 8 according to the guiding judgment result, for the feeding/discharging takeout and placement operation.
   3.4 Type recognition of lock pins, wherein in the actual operation of a terminal, the lock pin information provided by the terminal operating system 1 may be deviated, so the visual recognition device 10 is used to recognize a type of the lock pins in the process of the lock pin disassembling and assembling operation. The PLC controller 3 controls the visual recognition device 10 on the robot system 5 to perform photo recognition on the lock pins. When the type of the lock pins recognized by the visual recognition device 10 is consistent with lock pin information transmitted by the terminal operating system 1, the lock pin disassembling and assembling operation is continued. On the contrary, an error is reported. The type of the lock pins is manually confirmed through the HMI touch screen 9. The confirmed type of the lock pins is fed back to the terminal operating system 1 and the guiding system for information update; and then the lock pin disassembling and assembling operation is continued.
   3.5 In the guiding process: in the guiding process of a type of lock pins, as the quantity of this type of lock pins that need to be disassembled and assembled changes, the guiding system (the PC host 2) may make an update according to the information transmitted by the terminal operating system 1, perform compared calculation on the quantity of this type of lock pins again with the current quantity of this type of lock pins in the stacked storage unit 6, update the source and destination of this type of lock pins, and then continue to perform the guiding process; and when a transfer or temporary storage container 11 appears at a terminal, at the end of a guiding process of a type of lock pins, the stacked storage unit 6 also stores this type of lock pins, and then this type of lock pins in the stacked storage unit 6 need to be emptied and restored to an initialized state.

Through the above-mentioned process, the servo crane 7 repeatedly performs the classified storage and feeding/discharging takeout and placement operations of the lock pins under the guidance of the PLC controller 3.

A person of ordinary skill in the art should realize that the above embodiments are only used to illustrate the present invention, and are not used as a limitation of the present invention, as long as the changes and variants of the above embodiments within the scope of the present invention fall within the scope of the claims of the present invention.

## Claims

1. A control system for guiding classified storage and feeding/discharging takeout and placement of lock pins, comprising:
a terminal operating system, a guiding system, a robot system, a feeding/discharging device, a transportation unit, and a stacked storage unit, **characterized in that**
the terminal operating system is configured to acquire terminal operation information in real time and transmit information on types and quantity of containers that need to be unloaded and loaded and information on types and quantity of the corresponding lock pins to the guiding system; and
the guiding system is configured to guide a source and a destination of lock pins according to the information transmitted by the terminal operating system, and control the robot system, the feeding/discharging device, the transportation unit and the stacked storage unit to perform operations for disassembly and assembly, classified storage and feeding/discharging takeout and placement of the lock pins;
the guiding system comprises a PC host and a PLC controller; the PC host is configured to receive the information on the types and quantity of containers that need to be unloaded and loaded and the information on the types and quantity to the corresponding lock pins transmitted by the terminal operating system, perform classified calculation on the lock pins that need to be disassembled and assembled, then make a guiding judgment on the source of assembling the lock pins and the destination of disassembling the lock pins, and transmit a guiding judgment result to the PLC controller; and the PLC controller is configured to control the robot system to disassemble and assemble the lock pins according to the information transmitted by the PC host, and transport the disassembled lock pins to the stacked storage unit by using the transportation unit for classified storage, or control the feeding/discharging device to perform a feeding/discharging takeout and placement operation for the lock pins, and perform double confirmation for the types and the quantity of the lock pins;
the stacked storage unit may be divided into a plurality of stacking areas through the PLC controller, and is configured to store lock pins of the same type in the same stacking area;
whereby the control system is further configured to perform a control method for guiding classified storage and feeding/discharging takeout and placement of the lock pins comprising: starting a lock pin disassembling and assembling platform, and then establishing a communication between the terminal operating system and the guiding system, wherein the terminal operating system is configured to transmit information of containers that need to be unloaded and loaded in the current operation and the information of the corresponding lock pins to the guiding system; and
performing classified calculation on the pin locks by the guiding system, judging a source and a destination of each type of lock pins and making a guiding process, wherein the guiding system is configured to control the robot system, the feeding/discharging device, the transportation unit and the stacked storage unit to perform operations for disassembly and assembly, classified storage and feeding/discharging takeout and placement of the lock pins; whereby the guiding system is further configured to perform a classified calculation procedure as follows: the PC host classifies the lock pins according to the information transmitted by the terminal operating system, counts the quantity of each type of lock pins that need to be disassembled and assembled, then perform compared calculation on the quantity of each type of lock pins that need to be disassembled and assembled and a dynamic quantity of said type of lock pins stored in the stacked storage unit, and finally makes a guiding judgment on the source of assembling each type of lock pins and the destination of disassembling the lock pins, and transmit a guiding judgment result to the PLC controller;
the guiding process is as follows:
a lock pin disassembling and assembling operation, wherein the PLC controller controls the robot system to disassemble and assemble the lock pins that need to be disassembled and assembled, and transfers the disassembled lock pins to the transportation device;
classified storage of the lock pins, wherein the PLC controller transfers the disassembled lock pins to an exchange area of the stacked storage unit by using the transportation device, and controls a servo crane to perform classified storage on the lock pins in the exchange area; and
a feeding/discharging takeout and placement operation, wherein the PLC controller guides the servo crane to transfer the disassembled lock pins or the lock pins in the exchange area to the feeding/discharging device for the feeding/discharging takeout and placement operation;
the guiding process further comprises recognizing types of the lock pins as follows: in the process of the lock pin disassembling and assembling operation, the PLC controller controls a visual recognition device on the robot system to perform photo recognition on the lock pins; when the type of the lock pins recognized by the visual recognition device is consistent with the information of the lock pins transmitted by the terminal operating system, the lock pin disassembling and assembling operation is continued; on the contrary, an error is reported; the type of the lock pins is manually confirmed through an HMI touch screen; the confirmed type of the lock pins is fed back to the terminal operating system and the guiding system for information update; and then the lock pin disassembling and assembling operation is continued;
in the guiding process of a type of lock pins, as the quantity of said type of lock pins that need to be disassembled and assembled changes, the guiding system makes an update according to the information transmitted by the terminal operating system, performs compared calculation on the quantity of said type of lock pins again with the current quantity of said type of lock pins in the stacked storage unit, updates the source and destination of said type of lock pins, and then continues to perform the guiding process; and
when a transfer or temporary storage container appears at a terminal, at the end of a guiding process of a type of lock pins, the stacked storage unit also stores said type of lock pins, and then said type of lock pins in the stacked storage unit needs to be emptied and restored to an initialized state.

2. The control system for guiding classified storage and feeding/discharging takeout and placement of lock pins according to claim 1, wherein the transportation unit comprises a transportation device and a servo crane; the transportation device is configured to transport the lock pins disassembled by the robot system to an exchange area of the stacked storage unit; and the servo crane is configured to perform classified storage on the switched lock pins or perform the feeding/discharging takeout and placement operation through the feeding/discharging device.

3. The control system for guiding classified storage and feeding/discharging takeout and placement of lock pins according to claim 1, wherein the control system for guiding classified storage and feeding/discharging takeout and placement of lock pins further comprises a visual recognition device and an HMI touch screen; the visual recognition device is installed on an end shaft of the robot system to perform photo recognition on the lock pins; the HMI touch screen is configured to perform a manual operation; and when lock pin information recognized by the visual recognition device is inconsistent with lock pin information provided by the terminal operating system, a lock pin type is manually confirmed through the HMI touch screen, and the HMI touch screen feeds the result back to the terminal operating system and the guiding system.

4. The control system for guiding classified storage and feeding/discharging takeout and placement of lock pins according to claim 4, wherein the visual recognition device is a binocular vision camera.

5. A control method for guiding classified storage and feeding/discharging takeout and placement of lock pins, which adopts the control system according to any one of claims 1 to 4 and comprises the following steps:
starting a lock pin disassembling and assembling platform, and then establishing a communication between the terminal operating system and the guiding system, wherein the terminal operating system is configured to transmit information on the types and quantity of containers that need to be unloaded and loaded in the current operation and information on the types and quantity of corresponding lock pins to the guiding system; and
performing classified calculation on the pin locks by the guiding system, judging a source and a destination of each type of lock pins and making a guiding process, wherein the guiding system is configured to control the robot system, the feeding/discharging device, the transportation unit and the stacked storage unit to perform operations for disassembly and assembly, classified storage and feeding/discharging takeout and placement of the lock pins;
a classified calculation procedure performed by the guiding system for the pin locks is as follows: the PC host classifies the lock pins according to the information transmitted by the terminal operating system, counts the quantity of each type of lock pins that need to be disassembled and assembled, then perform compared calculation on the quantity of each type of lock pins that need to be disassembled and assembled and a dynamic quantity of said type of lock pins stored in the stacked storage unit, and finally makes a guiding judgment on the source of assembling each type of lock pins and the destination of disassembling the lock pins, and transmit a guiding judgment result to the PLC controller;
the guiding procedure is as follows:
a lock pin disassembling and assembling operation, wherein the PLC controller controls the robot system to disassemble and assemble the lock pins that need to be disassembled and assembled, and transfers the disassembled lock pins to the transportation device;
classified storage of the lock pins, wherein the PLC controller transfers the disassembled lock pins to an exchange area of the stacked storage unit by using the transportation device, and controls the servo crane to perform classified storage on the lock pins in the exchange area; and
a feeding/discharging takeout and placement operation, wherein the PLC controller guides the servo crane to transfer the disassembled lock pins or the lock pins in the exchange area to the feeding/discharging device for the feeding/discharging takeout and placement operation;
the guiding process further comprises recognizing types of the lock pins as follows: in the process of the lock pin disassembling and assembling operation, the PLC controller controls the visual recognition device on the robot system to perform photo recognition on the lock pins; when the type of the lock pins recognized by the visual recognition device is consistent with lock pin information transmitted by the terminal operating system, the lock pin disassembling and assembling operation is continued; on the contrary, an error is reported; the type of the lock pins is manually confirmed through the HMI touch screen; the confirmed type of the lock pins is fed back to the terminal operating system and the guiding system for information update; and then the lock pin disassembling and assembling operation is continued;
in the guiding process of a type of lock pins, as the quantity of said type of lock pins that need to be disassembled and assembled changes, the guiding system makes an update according to the information transmitted by the terminal operating system, performs compared calculation on the quantity of said type of lock pins again with the current quantity of said type of lock pins in the stacked storage unit, updates the source and destination of said type of lock pins, and then continues to perform the guiding process; and
when a transfer or temporary storage container appears at a terminal, at the end of a guiding process of a type of lock pins, the stacked storage unit also stores said type of lock pins, and then said type of lock pins in the stacked storage unit need to be emptied and restored to an initialized state.

## Patentansprüche

1. Ein Steuerungssystem und -verfahren zur Anleitung der klassifizierten Lagerung und der Aufnahme- und Ablagearbeiten beim Be- und Entladen von Verrieglungsstiften, **dadurch gekennzeichnet, dass** es Folgendes umfasst:
Terminalverwaltungssystem, Anleitungssystem, Robotersystem, Be- und Entladeeinrichtung, Transporteinheit und Stapel- und Lagerungseinheit;
wobei das Terminalverwaltungssystem in Echtzeit Betriebsinformationen am Terminal erfasst und dem Anleitungssystem die Informationen zu den zu entladenden und zu ladenden Containern sowie die entsprechenden Informationen zu den Verriegelungsstiften übermittelt;
wobei das Anleitungssystem auf Grundlage der vom Terminalverwaltungssystem übermittelten Informationen die Quellen und Zielorte der Verriegelungsstifte steuert und das Robotersystem, die Be- und Entladeeinrichtung, die Transporteinheiten und die Stapel- und Lagerungseinheit zum Ein-/Abbau, zur klassifizierten Lagerung sowie zu Aufnahme- und Ablagearbeiten beim Be- und Entladebetrieb der Verriegelungsstifte ansteuert,
wobei das Anleitungssystem einen PC-Hauptrechner und eine SPS-Steuerung umfasst; wobei der PC-Hauptrechner die vom Terminalverwaltungssystem übermittelten Informationen über Typen und Anzahlen der für den jeweiligen Einsatz zu entladenden und zu beladenden Container empfängt und eine Klassifizierungsberechnung der abzubauenden und einzubauenden Stiften durchführt; wobei er eine Anleitungsentscheidung über die Quelle der einzubauenden Stifte und den Zielort der abzubauenden Stiften anschließend trifft und das Ergebnis dieser Anleitungsentscheidung an die SPS-Steuerung übermittelt, wobei die SPS-Steuerung auf Grundlage der vom PC-Hauptrechner übermittelten Informationen das Robotersystem beim Ein-/Abbauen der Stifte steuert, eine Transporteinheit nutzt, um die abgebauten Stiften zur Stapel- und Lagerungseinheit zur klassifizierten Lagerung zu befördern, oder die Be- und Entladeeinrichtung für den Be- und Entladebetrieb der Stifte steuert, wobei Typen und Anzahlen der Verriegelungsstiften doppelt bestätigt werden;
wobei die Stapel- und Lagerungseinheit durch die SPS-Steuerung in mehrere Stapelbereiche unterteilt wird, um gleichartige Verriegelungsstifte im selben Stapelbereich zu lagern;
wobei das Steuerungssystem zur Anleitung der klassifizierten Lagerung und der Aufnahme- und Ablagearbeiten beim Be- und Entladen von Verrieglungsstiften das folgende Steuerungsverfahren zur Anleitung der klassifizierten Lagerung und der Aufnahme- und Ablagearbeiten beim Be- und Entladen von Verrieglungsstiften durchführt, das Folgendes umfasst:
wobei nach dem Start der Ein-/Abbauplattform von Verriegelungsstiften das Terminalverwaltungssystem eine Kommunikation mit dem Anleitungssystem herstellt; wobei das Terminalverwaltungssystem dem Anleitungssystem die Informationen der für den jeweiligen Einsatz zu entladenden und zu beladenden Container sowie die Informationen der zugehörigen Verriegelungsstiften übermittelt;
wobei das Anleitungssystem anschließend eine Klassifizierungsberechnung der Verriegelungsstifte durchführt, für jeden Typ des Verriegelungsstifts dessen Quelle und Zielort bestimmt und die Anleitungsbearbeitung durchführt; wobei das Anleitungssystem das Robotersystem, die Be- und Entladeeinrichtung, die Transporteinheiten und die Stapel- und Lagerungseinheit zum Ein-/Abbau, zur klassifizierten Lagerung sowie zu Aufnahme- und Ablagearbeiten beim Be- und Entladebetrieb der Verriegelungsstifte ansteuert,
wobei das Anleitungssystem die Klassifizierungsberechnung der Verriegelungsstiften wie folgt durchführt: Der PC-Hauptrechner klassifiziert die Verriegelungsstiften auf Grundlage der vom Terminalverwaltungssystem übermittelten Informationen und ermittelt die Anzahl der für den Einbau und den Abbau jedes Typs erforderlichen Verriegelungsstiften, wobei das System die Anzahl der jeweils einzubauenden und abzubauenden Verriegelungsstiften mit der dynamischen Bestandsmenge dieser Verriegelungsstiften in der Stapel- und Lagerungseinheit vergleicht und berechnet, wobei es abschließend für jeden Typ eine Anleitungsentscheidung über die Quelle der einzubauenden und den Verbleib der abzubauenden Verriegelungsstiften trifft und das Ergebnis der Anleitungsentscheidung an die SPS-Steuerung übermittelt,
wobei der Anleitungsbearbeitungsprozess wie folgt ist:
wobei die SPS-Steuerung beim Ein-/Abbaubetrieb der Verrieglungsstifte das Robotersystem zum Ein-/Abbau der zu einzubauenden bzw. abzubauenden Verrieglungsstifte steuert und die abgebauten Verrieglungsstifte auf die Transportvorrichtung überführt;
wobei die SPS-Steuerung während der klassifizierten Lagerung der Verriegelungsstiften die Transportvorrichtung nutzt, um die abgebauten Verriegelungsstiften in den Austauschbereich der Stapel- und Lagerungseinheit zu überführen, und entsprechend dem Ergebnis der Anleitungsentscheidung den servogesteuerten Laufkran steuert, um die in den Austauschbereich befindlichen Verriegelungsstiften sortiert einzulagern;
wobei die SPS-Steuerung während der Aufnahme- und Ablagearbeit beim Be- und Entladebetrieb den servogesteuerten Laufkran an, die abgebauten Verriegelungstiften beziehungsweise die Verriegelungstiften im Austauschbereich zur Be- und Entladeeinrichtung zu überführen, um dort die Aufnahme- und Ablagearbeiten beim Be- und Entladebetrieb durchzuführen,
wobei die Anleitungsbearbeitung noch Typenerkennung von Verriegelungsstiften umfasst;
wobei der Prozess der Typenerkennung von Verriegelungsstiften Folgendes umfasst: Während der Ein- und Abbauarbeiten der Verriegelungsstiften steuert die SPS-Steuerung die visuelle Erkennungseinrichtung am Robotersystem und veranlasst bildbasierte Aufnahmen zur Erkennung der Verriegelungsstiften, wobei die Ein-/Abbauarbeiten fortgesetzt werden, wenn der von der visuellen Erkennungseinrichtung erkannte Stiftentyp und die vom Terminalverwaltungssystem übermittelten Informationen übereintimmen; andernfalls wird ein Fehler gemeldet, wobei der Stiftentyp manuell über das HMI-Touchscreen bestätigt und der bestätigte Stiftentyp zur Aktualisierung der Informationen an das Terminalverwaltungssystem und das Anleitungssystem zurückgemeldet wird, wonach die Ein-/Abbauarbeiten fortgesetzt werden,
wobei während der Anleitungsbearbeitung:
während der Durchführung des Anleitungsprozesses für einen bestimmten Typ von Verriegelungsstiften, wenn sich die Anzahl der einzubauenden und abzubauenden Stiften dieses Typs ändert, aktualisiert das Anleitungssystem basierend auf den vom Terminalverwaltungssystem übermittelten Informationen den Datensatz, führt einen erneuten Vergleich der Anzahl dieser Verriegelungsstiften mit der aktuellen Anzahl in der Stapel- und Lagerungseinheit durch, aktualisiert die Quellen und Zielorte dieser Verriegelungsstiften und setzt dann den Anleitungsprozess fort;
wenn am Terminal umgeschlagene oder vorübergehend gelagerte Container vorhanden sind und nach dem Abschluss des Anleitungsprozesses für einen bestimmten Typ von Verriegelungsstiften die Stapel- und Lagerungseinheit diese Verriegelungsstiften weiterhin enthält, sind die betreffenden Verriegelungsstiften in der Stapel- und Lagerungseinheit zu entfernen und diese in den Initialzustand zurückzusetzen.

2. Steuerungssystem zur Anleitung der klassifizierten Lagerung und der Aufnahme- und Ablagearbeiten beim Be- und Entladen von Verrieglungsstiften nach Anspruch 1, **dadurch gekennzeichnet, dass** die Transporteinheit eine Transportvorrichtung und einen servogesteuerten Laufkran umfasst; wobei die Transportvorrichtung dazu dient, die vom Robotersystem abgebauten Verriegelungsstiften in den Austauschbereich der Stapel- und Lagerungseinheit zu überführen; wobei der servogesteuerte Laufkran die Verriegelungsstiften sortiert und im Austauschbereich lagert oder mittels der Be- und Entladeeinrichtung einen Be- und Entladebetrieb durchführt.

3. Steuerungssystem zur Anleitung der klassifizierten Lagerung und der Aufnahme- und Ablagearbeiten beim Be- und Entladen von Verrieglungsstiften nach Anspruch 1, **dadurch gekennzeichnet, dass** das Steuerungssystem zur Anleitung der klassifizierten Lagerung und der Aufnahme- und Ablagearbeiten beim Be- und Entladen von Verrieglungsstiften ferner eine visuelle Erkennungseinrichtung und ein HMI-Touchscreen umfasst; wobei die visuelle Erkennungseinrichtung an der Endachse des Robotersystems angebracht ist und zur fotografischen Erkennung der Verriegelungsstiften dient; wobei das HMI-Touchscreen der manuellen Bedienung dient, wobei der Bediener über das HMI-Touchscreen den Verriegelungsstiftentyp bestätigt, wenn die von der visuellen Erkennungseinrichtung ermittelten Informationen von Verriegelungsstiften nicht mit den vom Terminalverwaltungssystem bereitgestellten Informationen übereinstimmen; wobei das HMI-Touchscreen das Ergebnis an das Terminalverwaltungssystem und an das Anleitungssystem zurückmeldet.

4. Steuerungssystem zur Anleitung der klassifizierten Lagerung und der Aufnahme- und Ablagearbeiten beim Be- und Entladen von Verrieglungsstiften nach Anspruch 3, **dadurch gekennzeichnet, dass** die visuelle Erkennungseinrichtung eine Stereokamera ist.

5. Ein Steuerungsverfahren zur Anleitung der klassifizierten Lagerung und der Aufnahme- und Ablagearbeiten beim Be- und Entladen von Verrieglungsstiften, **dadurch gekennzeichnet, dass** das in einem der Ansprüche 1 bis 4 genannte Steuerungssystem verwendet wird und das Steuerungsverfahren Folgende Schritte umfasst:
wobei nach dem Start der Ein-/Abbauplattform von Verriegelungsstiften das Terminalverwaltungssystem eine Kommunikation mit dem Anleitungssystem herstellt; wobei das Terminalverwaltungssystem dem Anleitungssystem die Informationen über Typen und Anzahlen der für den jeweiligen Einsatz zu entladenden und zu beladenden Container sowie die Informationen über Typen und Anzahlen der zugehörigen Verriegelungsstiften übermittelt;
wobei das Anleitungssystem anschließend eine Klassifizierungsberechnung der Verriegelungsstifte durchführt, für jeden Typ des Verriegelungsstifts dessen Quelle und Zielort bestimmt und die Anleitungsbearbeitung durchführt; wobei das Anleitungssystem das Robotersystem, die Be- und Entladeeinrichtung, die Transporteinheiten und die Stapel- und Lagerungseinheit zum Ein-/Abbau, zur klassifizierten Lagerung sowie zu Aufnahme- und Ablagearbeiten beim Be- und Entladebetrieb der Verriegelungsstifte ansteuert,
wobei das Anleitungssystem die Klassifizierungsberechnung der Verriegelungsstiften wie folgt durchführt: Der PC-Hauptrechner klassifiziert die Verriegelungsstiften auf Grundlage der vom Terminalverwaltungssystem übermittelten Informationen und ermittelt die Anzahl der für den Einbau und den Abbau jedes Typs erforderlichen Verriegelungsstiften, wobei das System die Anzahl der jeweils einzubauenden und abzubauenden Verriegelungsstiften mit der dynamischen Bestandsmenge dieser Verriegelungsstiften in der Stapel- und Lagerungseinheit vergleicht und berechnet, wobei es abschließend für jeden Typ eine Anleitungsentscheidung über die Quelle der einzubauenden und den Verbleib der abzubauenden Verriegelungsstiften trifft und das Ergebnis der Anleitungsentscheidung an die SPS-Steuerung übermittelt,
wobei Anleitung- und Bearbeitungsprozesse wie folgt gestaltet sind:
beim Ein-/Abbaubetrieb der Verrieglungsstifte steuert die SPS-Steuerung das Robotersystem zum Ein-/Abbau der zu einzubauenden bzw. abzubauenden Verrieglungsstifte und überführt die abgebauten Verrieglungsstifte auf die Transportvorrichtung;
wobei die SPS-Steuerung während der klassifizierten Lagerung der Verriegelungsstiften die Transportvorrichtung nutzt, um die abgebauten Verriegelungsstiften in den Austauschbereich der Stapel- und Lagerungseinheit zu überführen, und entsprechend dem Ergebnis der Anleitungsentscheidung den servogesteuerten Laufkran steuert, um die in den Austauschbereich befindlichen Verriegelungsstiften sortiert einzulagern;
wobei die SPS-Steuerung während der Aufnahme- und Ablagearbeit beim Be- und Entladebetrieb den servogesteuerten Laufkran an, die abgebauten Verriegelungstifte beziehungsweise die Verriegelungstifte im Austauschbereich zur Be- und Entladeeinrichtung zu überführen, um dort die Aufnahme- und Ablagearbeiten beim Be- und Entladebetrieb durchzuführen,
wobei die Anleitungsbearbeitung noch Typenerkennung von Verriegelungsstiften umfasst;
wobei der Prozess der Typenerkennung von Verriegelungsstiften Folgendes umfasst: Während der Ein- und Abbauarbeiten der Verriegelungsstiften steuert die SPS-Steuerung die visuelle Erkennungseinrichtung am Robotersystem und veranlasst bildbasierte Aufnahmen zur Erkennung der Verriegelungsstiften, wobei die Ein-/Abbauarbeiten fortgesetzt werden, wenn der von der visuellen Erkennungseinrichtung erkannte Stiftentyp und die vom Terminalverwaltungssystem übermittelten Informationen übereinstimmen; andernfalls wird ein Fehler gemeldet, wobei der Stiftentyp manuell über das HMI-Touchscreen bestätigt und der bestätigte Stiftentyp zur Aktualisierung der Informationen an das Terminalverwaltungssystem und das Anleitungssystem zurückgemeldet wird, wonach die Ein-/Abbauarbeiten fortgesetzt werden,
wobei während der Anleitung- und Bearbeitungsprozesse:
während der Durchführung des Anleitungsprozesses für einen bestimmten Typ von Verriegelungsstiften, wenn sich die Anzahl der einzubauenden und abzubauenden Stiften dieses Typs ändert, aktualisiert das Anleitungssystem basierend auf den vom Terminalverwaltungssystem übermittelten Informationen den Datensatz, führt einen erneuten Vergleich der Anzahl dieser Verriegelungsstiften mit der aktuellen Anzahl in der Stapel- und Lagerungseinheit durch, aktualisiert die Quellen und Zielorte dieser Verriegelungsstiften und setzt dann den Anleitungsprozess fort;
wenn am Terminal umgeschlagene oder vorübergehend gelagerte Container vorhanden sind und nach dem Abschluss des Anleitungsprozesses für einen bestimmten Typ von Verriegelungsstiften die Stapel- und Lagerungseinheit diese Verriegelungsstiften weiterhin enthält, sind die betreffenden Verriegelungsstiften in der Stapel- und Lagerungseinheit zu entfernen und diese in den Initialzustand zurückzusetzen.

## Revendications

1. Système de contrôle fournissant un guide pour stocker des goupilles de verrouillage par catégorie ainsi que pour les prendre et déposer en manière de charge et décharge, comprenant :
un système de gestion de quai, un système de guidage, un système robotique, un dispositif de charge et décharge, une unité de transport et une unité d'empilement et stockage, **caractérisé en ce que**
le système de gestion de quai est configuré pour acquérir des informations de manœuvre de quai en temps réel, et transmettre des informations à propos des types et du nombre de conteneurs ayant besoin de décharge et charge ainsi que des informations à propos des types et du nombre des goupilles de verrouillage correspondantes au système de guidage;
le système de guidage est configuré pour guider des goupilles de verrouillage sur leur source et destinations selon les informations transmises par le système de gestion de quai, et contrôler le système robotique, le dispositif de charge et décharge, l'unité de transport et l'unité d'empilement et stockage pour démonter et assembler, et stocker des goupilles de verrouillage par catégorie ainsi que pour les prendre et déposer en manière de charge et décharge;
le système de guidage comprend un ordinateur principal de terminal PC et un contrôleur PLC; l'ordinateur principal de terminal PC est configuré pour recevoir les informations à propos des types et du nombre de conteneurs ayant besoin de décharge et charge ainsi que les informations à propos des types et du nombre des goupilles de verrouillage correspondantes transmises par le système de gestion de quai, calculer les goupilles de verrouillage ayant besoin de démontage et assemblage par catégorie, faire un jugement de guidage sur la source d'assemblage des goupilles de verrouillage et la destination de démontage des goupilles de verrouillage, et transmettre un résultat de jugement de guidage au contrôleur PLC; ainsi que le contrôleur PLC est configuré pour contrôler le système robotique pour démonter et assembler les goupilles de verrouillage selon les informations transmises par l'ordinateur principal de terminal PC, et transporter les goupilles de verrouillage démontées vers l'unité d'empilement et stockage en utilisant l'unité de transport pour les stocker par catégorie, ou contrôler dispositif de charge et décharge pour prendre et déposer en manière de charge et décharge les goupilles de verrouillage, tout faire une double vérification sur les types et le nombre des goupilles de verrouillage;
l'unité d'empilement et stockage peut être divisée en une pluralité de zones d'empilement par le contrôleur PLC, et est configurée pour stocker des goupilles de verrouillage du même type dans la même zone d'empilement;
le système de contrôle est en outre configuré pour exécuter une méthode de contrôle afin de fournir un guide pour stocker des goupilles de verrouillage par catégorie ainsi que pour les prendre et déposer en manière de charge et décharge,
la méthode de contrôle comprend les étapes de
démarrage d'une plateforme à démonter et assembler des goupilles de verrouillage, puis établissement d'une communication entre le système de gestion de quai et le système de guidage, dans lesquels le système de gestion de quai est configuré pour transmettre au système de guidage les informations des conteneurs ayant besoin de décharge et charge lors de l'opération en cours ainsi que les informations des goupilles de verrouillage correspondantes; et
calcul des goupilles de verrouillage en catégorie par le système de guidage, jugement d'une source et d'une destination de chaque type de goupilles de verrouillage, et exécution d'un processus de guidage, dans lesquels le système de guidage est configuré pour contrôler le système robotique, le dispositif de charge et décharge, l'unité de transport et l'unité d'empilement et stockage, afin de démonter et assembler, et stocker des goupilles de verrouillage par catégorie, ainsi que afin de les prendre et déposer en manière de charge et décharge;
le système de guidage est en outre configuré pour effectuer une procédure de calcul classifiée, dans laquelle l'ordinateur principal de terminal PC classe les goupilles de verrouillage selon les informations transmises par le système de gestion de quai, compte le nombre de chaque type de goupilles de verrouillage ayant besoin de démontage et assemblage, puis compare le nombre de chaque type de goupilles de verrouillage ayant besoin de démontage et assemblage avec un nombre dynamique de tel type de goupilles de verrouillage stockée dans l'unité d'empilement et stockage, et enfin fait un jugement de guidage sur la source d'assemblage de chaque type de goupilles de verrouillage et sur la destination du démontage des goupilles de verrouillage, puis transmet un résultat de jugement de guidage au contrôleur PLC;
le processus de guidage comprend:
une étape de démonter et assembler des goupilles de verrouillage, dans laquelle le contrôleur PLC contrôle le système robotique pour démonter et assembler les goupilles de verrouillage ayant besoin de démontage et assemblage, et transfère les goupilles de verrouillage démontées vers l'unité de transport;
une étape de stocker les goupilles de verrouillage par catégorie, dans laquelle le contrôleur PLC transfère les goupilles de verrouillage démontées vers une zone d'échange de l'unité d'empilement et stockage à l'aide de l'unité de transport, et contrôle une grue servo pour stocker les goupilles de verrouillage par catégorie dans la zone d'échange; et
une étape de prendre et déposer en manière de charge et décharge les goupilles de verrouillage, dans laquelle le contrôleur PLC guide la grue servo pour transférer les goupilles de verrouillage démontées ou les goupilles de verrouillage dans la zone d'échange vers le dispositif de charge et décharge afin de prendre et déposer en manière de charge et décharge les goupilles de verrouillage;
le processus de guidage comprend en outre une étape de reconnaissance des types des goupilles de verrouillage, dans laquelle
dans l'étape de démonter et assembler des goupilles de verrouillage, le contrôleur PLC contrôle un dispositif de reconnaissance visuelle sur le système robotique pour reconnaître en manière de photo les goupilles de verrouillage; lorsque le type des goupilles de verrouillage reconnu par le dispositif de reconnaissance visuelle est en accord avec l'information des goupilles de verrouillage transmises par le système de gestion de quai, l'étape de démonter et assembler des goupilles de verrouillage se continue; au contraire, une erreur est signalée; le type des goupilles de verrouillage est confirmé manuellement via un écran tactile HMI; le type de goupilles de verrouillage confirmé est renvoyé au système de gestion de quai et au système de guidage pour une mise à jour des informations; puis l'étape de démonter et assembler des goupilles de verrouillage se continue;
dans le processus de guidage d'un type de goupilles de serrure, à mesure que le nombre de chaque type de goupilles de verrouillage ayant besoin de démontage et assemblage change, le système de guidage effectue une mise à jour en fonction des informations transmises par le système de gestion de quai, compare le nombre de tel type de goupilles de verrouillage avec le nombre actuel de tel type de goupilles de verrouillage dans l'unité d'empilement et stockage, met à jour la source et destination de tel type de goupilles de verrouillage, puis continue d'effectuer le processus de guidage;
lorsqu'un conteneur de transfert ou de stockage temporaire apparaît à un quai, à la fin d'un processus de guidage d'un type de goupilles de verrouillage, l'unité d'empilement et stockage stocke également ce type de goupilles de verrouillage, puis ce type de goupilles de verrouillage dans l'unité d'empilement et stockage doit être vidé et rétabli à un état initialisé.

2. Système de contrôle fournissant un guide pour stocker des goupilles de verrouillage par catégorie ainsi que pour les prendre et déposer en manière de charge et décharge, selon la revendication 1, **caractérisé en ce que** l'unité de transport comprend un dispositif de transport et une grue servo; le dispositif de transport est configuré pour transporter les goupilles de verrouillage démontées par le système robotique vers une zone d'échange de l'unité d'empilement et stockage; et la grue servo est configurée pour stocker par catégorie les goupilles de verrouillage échangées ou les prendre et déposer en manière de charge et décharge par le dispositif de charge et décharge.

3. Système de contrôle fournissant un guide pour stocker des goupilles de verrouillage par catégorie ainsi que pour les prendre et déposer en manière de charge et décharge, selon la revendication 1, **caractérisé en ce que** le système de contrôle comprend en outre un dispositif de reconnaissance visuelle et un écran tactile HMI; le dispositif de reconnaissance visuelle est installé sur un arbre terminal du système robotique pour reconnaître en manière de photo les goupilles de verrouillage; l'écran tactile HMI est configuré pour effectuer une opération manuelle; et lorsque les informations de goupilles de verrouillage reconnues par le dispositif de reconnaissance visuelle sont incohérentes avec les informations de goupilles de verrouillage fournies par le système de gestion de quai, un type de goupilles de verrouillage est confirmé manuellement via l'écran tactile HMI, et l'écran tactile HMI renvoie le résultat au système de gestion de quai et au système de guidage.

4. Système de contrôle fournissant un guide pour stocker des goupilles de verrouillage par catégorie ainsi que pour les prendre et déposer en manière de charge et décharge, selon la revendication 4, **caractérisé en ce que** le dispositif de reconnaissance visuelle est une caméra à vision binoculaire.

5. Méthode de contrôle fournissant un guide pour stocker des goupilles de verrouillage par catégorie ainsi que pour les prendre et déposer en manière de charge et décharge, qui adopte le système de contrôle selon l'une quelconque des revendications 1 à 4 et comprend les étapes de
démarrage d'une plateforme à démonter et assembler des goupilles de verrouillage, puis établissement d'une communication entre le système de gestion de quai et le système de guidage, dans lesquels le système de gestion de quai est configuré pour transmettre au système de guidage les informations des conteneurs ayant besoin de décharge et charge lors de l'opération en cours ainsi que les informations des goupilles de verrouillage correspondantes; et
calcul des goupilles de verrouillage en catégorie par le système de guidage, jugement d'une source et d'une destination de chaque type de goupilles de verrouillage, et exécution d'un processus de guidage, dans lesquels le système de guidage est configuré pour contrôler le système robotique, le dispositif de charge et décharge, l'unité de transport et l'unité d'empilement et stockage, afin de démonter et assembler, et stocker des goupilles de verrouillage par catégorie, ainsi que afin de les prendre et déposer en manière de charge et décharge;
le système de guidage est en outre configuré pour effectuer une procédure de calcul classifiée, dans laquelle l'ordinateur principal de terminal PC classe les goupilles de verrouillage selon les informations transmises par le système de gestion de quai, compte le nombre de chaque type de goupilles de verrouillage ayant besoin de démontage et assemblage, puis compare le nombre de chaque type de goupilles de verrouillage ayant besoin de démontage et assemblage avec un nombre dynamique de tel type de goupilles de verrouillage stockée dans l'unité d'empilement et stockage, et enfin fait un jugement de guidage sur la source d'assemblage de chaque type de goupilles de verrouillage et sur la destination du démontage des goupilles de verrouillage, puis transmet un résultat de jugement de guidage au contrôleur PLC;
le processus de guidage comprend:
une étape de démonter et assembler des goupilles de verrouillage, dans laquelle le contrôleur PLC contrôle le système robotique pour démonter et assembler les goupilles de verrouillage ayant besoin de démontage et assemblage, et transfère les goupilles de verrouillage démontées vers l'unité de transport;
une étape de stocker les goupilles de verrouillage par catégorie, dans laquelle le contrôleur PLC transfère les goupilles de verrouillage démontées vers une zone d'échange de l'unité d'empilement et stockage à l'aide de l'unité de transport, et contrôle une grue servo pour stocker les goupilles de verrouillage par catégorie dans la zone d'échange; et
une étape de prendre et déposer en manière de charge et décharge les goupilles de verrouillage, dans laquelle le contrôleur PLC guide la grue servo pour transférer les goupilles de verrouillage démontées ou les goupilles de verrouillage dans la zone d'échange vers le dispositif de charge et décharge afin de prendre et déposer en manière de charge et décharge les goupilles de verrouillage;
le processus de guidage comprend en outre une étape de reconnaissance des types des goupilles de verrouillage, dans laquelle
dans l'étape de démonter et assembler des goupilles de verrouillage, le contrôleur PLC contrôle un dispositif de reconnaissance visuelle sur le système robotique pour reconnaître en manière de photo les goupilles de verrouillage; lorsque le type des goupilles de verrouillage reconnu par le dispositif de reconnaissance visuelle est en accord avec l'information des goupilles de verrouillage transmises par le système de gestion de quai, l'étape de démonter et assembler des goupilles de verrouillage se continue; au contraire, une erreur est signalée; le type des goupilles de verrouillage est confirmé manuellement via un écran tactile HMI; le type de goupilles de verrouillage confirmé est renvoyé au système de gestion de quai et au système de guidage pour une mise à jour des informations; puis l'étape de démonter et assembler des goupilles de verrouillage se continue;
dans le processus de guidage d'un type de goupilles de serrure, à mesure que le nombre de chaque type de goupilles de verrouillage ayant besoin de démontage et assemblage change, le système de guidage effectue une mise à jour en fonction des informations transmises par le système de gestion de quai, compare le nombre de tel type de goupilles de verrouillage avec le nombre actuel de tel type de goupilles de verrouillage dans l'unité d'empilement et stockage, met à jour la source et destination de tel type de goupilles de verrouillage, puis continue d'effectuer le processus de guidage,
lorsqu'un conteneur de transfert ou de stockage temporaire apparaît à un quai, à la fin d'un processus de guidage d'un type de goupilles de verrouillage, l'unité d'empilement et stockage stocke également ce type de goupilles de verrouillage, puis ce type de goupilles de verrouillage dans l'unité d'empilement et stockage doit être vidé et rétabli à un état initialisé.
